# EUROPEAN PATENT APPLICATION

(11) **EP 2 555 382 A1**
(43) Date of publication of application: **06.02.2013**
(21) Application number: 11176141.7
(22) Date of filing: 01.08.2011
(51) Int. Cl.: H02K 1/27, H02K 15/03

(54) **Permanent magnet assembly and method for fixing a permanent magnet onto a base plate**

(71) Applicant: Siemens Aktiengesellschaft, 80333 München (DE)
(72) Inventor: Urda, Adriana Cristina, 5230 Odense M (DK); Valbjoern, Jesper, 6000 Kolding (DK)

(57) **Abstract**

A permanent magnet assembly (16) comprising a base plate (11) and at least one permanent magnet piece (10) which is attached to the base plate (11) is described. The at least one permanent magnet piece (10) is fixed to the base plate (11) by means of at least one strap (13). Moreover, a method for fixing at least one permanent magnet piece (10) onto a base plate (11) is disclosed, comprising the steps of placing at least one permanent magnet piece (10) onto the base plate (11), heating at least one strap (13), sliding the at least one strap (13) over the at least one permanent magnet piece (10) and the base plate (11), and shrinking the at least one strap (13) by cooling it down.

## Description

The present invention relates to the technical field of electrical machines having a rotor which comprises magnets, in particular permanent magnets. In particular, the present invention relates to a permanent magnet assembly for an electrical machine. Further, the present invention relates to a rotor assembly, to an electrical machine and to a wind turbine, which are all equipped with such a permanent magnet assembly. Furthermore, the present invention relates to a method for fixing at least one permanent magnetic piece onto a base plate.

Electrical machines or electromechanical transducers are machines, which convert electrical energy into mechanical energy or vice versa. An electric motor is a widely used electrical machine that converts electrical energy into mechanical energy using magnetic field linkage. An electric generator is an electrical machine that converts mechanical energy into electrical energy also using a magnetic field linkage.

An electrical machine comprises a stator and a rotor. The stator is an assembly, which represents the stationary part of an electrical machine. The rotor is an assembly, which represents the moving part of an electrical machine.

In order to realize a magnetic field linkage, magnets, for instance permanent magnets, may be used in particular for a rotor of an electrical machine. In recent years, especially since the introduction of rare-earth magnetic materials, permanent magnet (PM) electrical machines have become popular since they eliminate the need for commutators and brushes, which are commonly used with conventional Direct Current (DC) electrical machine. The absence of an external electrical rotor excitation eliminates losses on the rotor and makes permanent magnet electrical machines more efficient. Further, the brushless design of a PM electrical machine allows conductor coils to be located exclusively in the stationary stator. In this respect it is mentioned that non-PM electrical machines, which are equipped with commutators and brushes, are susceptible to significantly higher maintenance costs.

PM electrical machines are also known for their durability, controllability, and absence of electrical sparking. Thanks to their advantages the PM electrical machines are widely used in many applications such as electric vehicles (electrical machine is a motor) or in power generation systems (electrical machine is a generator) such as for instance a wind turbine.

Strong permanent magnets, like rare-earth magnets, are used to an increasing extent in large electrical machines, especially in motors and generators. This is due to the increased efficiency and robustness compared to electrical excitation. But regarding practical applications some difficulties may occur. The materials, in particular of rare-earth magnets, may be rather brittle and cannot safely be fixed by bolting alone. The magnets may be fixed to a rotor rim for example by, for instance, gluing. Furthermore, it may be a difficult, time consuming and not least a hazardous process to handle the individual magnets and to get the correct position of each magnet as the magnets may be pulled towards other magnets and ferromagnetic objects in the production setup. Thus, the mounting and alignment of the permanent magnets at the rotor assembly are difficult and time consuming. Therefore, there may be a need for facilitating mounting and alignment of permanent magnets to a rotor assembly of an electrical machine.

Furthermore humidity and other aggressive substances and mechanical influences such as shocks and vibrations and mechanical stress du to heat extension can harm and damage the magnet.

There are existing solutions on the market for protecting the magnets. This is done by means of epoxy painting, powder coating, tape bondage or fully enclosed magnet modules.

To provide structural support and ease the fitting of the magnet to a rotor a magnet assembly is proposed, wherein a shape (i.e. a dovetail) is grind into the bedplate which fits into a complementary groove in the rotor yoke.

It is a first objective of the present invention to provide an improved permanent magnet assembly with an improved fixation of at least one permanent magnet piece to a base plate. It is a second objective of the present invention to provide a rotor assembly with the same advantages. A third objective of the present invention is to provide an electrical machine with the same advantages. A fourth objective of the present invention is to provide an advantageous wind turbine. A fifth objective of the present invention is to provide a method for fixing at least one permanent magnet piece onto a base plate.

The first objective is solved by a permanent magnet assembly as claimed in claim 1. The second objective is solved by a rotor assembly as claimed in claim 7. The third objective is solved by an electrical machine as claimed in claim 12. The fourth objective is solved by a wind turbine as claimed in claim 14. The fifth objective is solved by a method for fixing at least one permanent magnet piece onto a base plate as claimed in claim 15. The depending claims define further developments of the invention.

The inventive permanent magnet assembly comprises a base plate and at least one permanent magnet piece. The permanent magnet piece is attached to the base plate. The at least one permanent magnet piece is fixed to the base plate by means of at least one strap. Preferably, a number of straps may be used. The strap or the straps provide mechanical protection against shock and vibration. Moreover, the straps serve as mechanical protection of the magnets and as protective coating against impact of foreign objects, for instance in an air gap and during handling.

Advantageously, the straps can be designed to be heated and slid over the magnet-base plate assembly, were after they will cool down and shrink to give a tight fit. The magnets can be attached to the base plate by means of an adhesive, where after the assembly is mounted in a rotor with the straps already connected. Generally, the straps may be glued to the magnet piece and/or to the base plate to enhance assembly.

The at least one permanent magnet piece may comprise NdFeB (Neodymium Iron Boron). Preferably, it consists of NdFeB. The at least one strap may comprise steel or may consists of steel, for example stainless steel or magnetical steel.

Generally the at least one magnetic piece may be attached to the base plate by means of an adhesive.

The inventive permanent magnet assembly may comprise a second base plate. The second base plate may be connected to the first base plate. The previously mentioned base plate, to which the at least on permanent magnet piece is attached, is then identical with the first base plate. The second base plate may be welded, for example spot welded, to the first base plate.

Generally a brace or strap may hold a respective magnet onto the first base plate. The first base plate may be spot welded to the second base plate which fits into side grooves of a T-shaped slot. The spot welding may be carried out on the base plate between two adjacent magnets. The use of magnetical steel straps has the advantage of eliminating the magnetic air gap between the first and second base plate.

The second base plate may have a thickness between 2 mm and 3 mm, for example between 2.5 mm and 2.8 mm, advantageously between 2.6 mm and 2.7 mm. Preferably, the thickness of the second base plate is 2.65 mm so that it forms a proper and lasting connection in, for example, side grooves of a T-shaped slot of a rotor yoke.

In the context of the present invention a T-shaped slot comprises two side grooves. The T-shaped slot with the side grooves may be milled into the rotor.

Because the straps do not offer corrosion protection of the magnet piece, the magnet piece may be coated with a corrosion protecting means. This offers protection against a high corrosion class.

Preferably the first base plate and/or the second base plate may have a rectangular shape. Especially the base area and the top surface of the first base plate and/or the second base plate may have a rectangular shape. This has the advantage, that a base plate is composed of two rectangular pieces which are very easy to machine to the desired geometry.

To further protect the magnetic pieces against humidity and other aggressive substances, the magnet pieces can be additional surface treated.

The inventive rotor assembly for an electrical machine comprises a permanent magnet assembly as previously described. The inventive rotor assembly generally has the same advantages as the previously described permanent magnet assembly.

Preferably, the inventive rotor assembly comprises a rotor yoke with at least one groove for holding the permanent magnet assembly onto the rotor. Moreover, the groove may be designed for holding the first base plate and/or the second base plate onto the rotor. For example, the second base plate may comprise two sides which are inserted into corresponding side grooves, for example of T-shaped slot, of the rotor yoke. The T-shaped slot with the side grooves may be milled into the rotor.

Advantageously the at least one groove has a width between 2 mm and 3 mm, for example between 2.5 mm and 2.8 mm, advantageously between 2.6 mm and 2.7 mm, preferably 2.65 mm. Furthermore, the permanent magnet assembly may comprise a second base plate which is connected the first base plate. The second base plate may have a thickness which is equal to the width of the groove. For example, the thickness of the second base plate and the width of the groove may have a value of 2.65 mm. Preferably the permanent magnet piece is located completely outside of the T-shaped slot. For example, the base plate or the base plates are thicker than the depth of the T-shaped slot.

The rotor may comprise a rotation axis. Preferably, the permanent magnet assembly is slid into the grooves, for example of T-shaped slot, in a direction parallel to the rotation axis of the rotor. In this case the grooves may have a length which extends in a direction parallel to the rotation axis of the rotor.

Generally, the fixation of the permanent magnet to the rotor can also be provided by the magnetic force, especially the magnetic pull, of the permanent magnet. Moreover, the rotor may be an outer rotor. The permanent magnet assemblies mounted in the rotor may face towards the rotation axis of the rotor.

The inventive electrical machine comprises a permanent magnet assembly as previously described or a rotor assembly as previously described. The inventive electrical machine has the same advantages as the previously described permanent magnet assembly or the previously described rotor assembly. For example, the inventive electrical machine may be a generator. A number of magnet modules may be assembled in the generator by sliding them into side grooves of T-shaped slots formed in the rotor yoke. The magnet modules may be stacked very close to each other in the axial length to offer a very small air gap between two neighbouring magnet modules. This further offers a maximum utilization of the magnet material for the electrical machine performance.

Generally, the generator may comprise a rotor, a stator and a rotation axis. The rotor may be located radially outside of the stator. This means, that the outer rotor may rotate around the inner stator. The permanent magnet pieces may be located on an inner surface of the rotor. The permanent magnet pieces may face towards the rotation axis.

The inventive wind turbine comprises a previously described electrical machine and has the same advantages as the previously described electrical machine.

The inventive method for fixing at least one permanent magnet piece onto a base plate comprises the steps of placing at least one permanent magnet piece onto the base plate, heating at least one strap, sliding the at least one strap over the at least one permanent magnet piece and the base plate, and shrinking the at least one strap by cooling it down.

Before sliding the at least one strap over the assembly of permanent magnet piece and base plate, the magnet may be attached to the base plate by means of an adhesive. Generally, the straps may be glued to the magnet piece and/or to the base plate to enhance assembly. By means of the inventive method an assembly of permanent magnet piece and base plate is obtained which provides mechanical protection of the permanent magnet piece against shock and vibration. Generally, a magnet piece which comprises or consists of NdFeB may be used. Moreover, at least one steel strap, for example, a stainless steel or magnetical steel strap, may be used.

The present invention generally offers the possibility of a modular design without the need for a complicated brazing or welding process of the cover and base plate assembly as in existing solutions. Moreover, it provides an effective protection of the permanent magnet piece against shock and vibration. Furthermore, the straps serve as mechanical protection of the magnets and as protective coating against impact of foreign objects, for instance in an air gap and during handling.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Further features, properties and advantages of the present invention will become clear from the following description of an embodiment in conjunction with the accompanying drawings. All features are advantageous separate or in combination with each other.
- Figure 1: schematically shows a wind turbine.
- Figure 2: schematically shows a permanent magnet assembly in a view parallel to the rotation axis.
- Figure 3: schematically shows a permanent magnet assembly in an axial side view.
- Figure 4: schematically shows a permanent magnet assembly in a perspective view.
- Figure 5: schematically shows part of a rotor in a sectional view.
- Figure 6: schematically shows part of a rotor yoke or rotor housing with a magnet assembly in a sectional view.

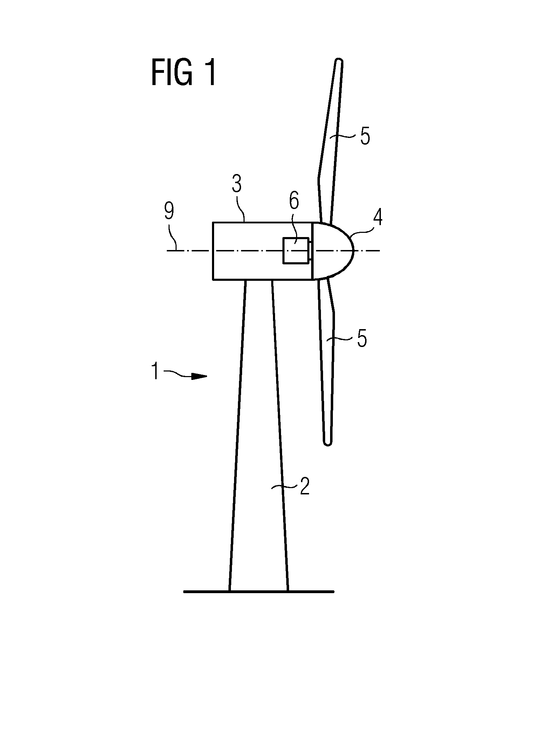

An embodiment of a present invention will now be described with reference to Figures 1 to 6.

Figure 1 schematically shows a wind turbine 1. The wind turbine 1 comprises a tower 2, a nacelle 3 and a hub 4. The nacelle 3 is located on top of the tower 2. A number of wind turbine blades 5 are attached to the hub 4. The hub 4 is mounted to the nacelle 3. Moreover, the hub 4 is pivot-mounted such that it is able to rotate about a rotation axis 9. An electrical machine, for example a generator 6, is located inside the nacelle 3. The wind turbine 1 is a direct drive wind turbine.

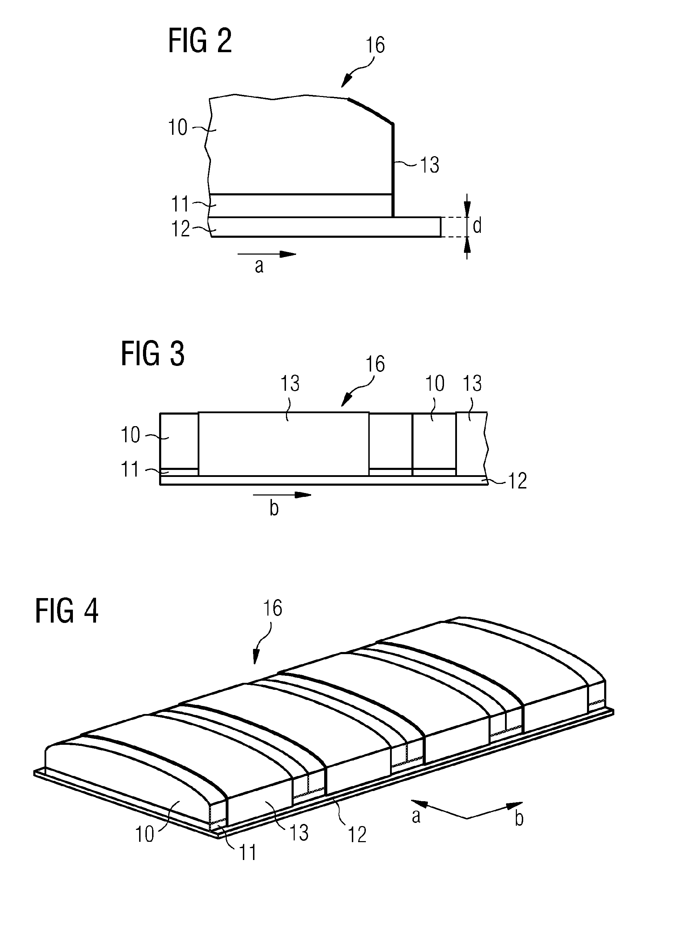

Figure 2 schematically shows a permanent magnet assembly in a view parallel to the rotation axis. The radial direction is designated by an arrow a. The permanent magnet assembly 16 which is shown in Figure 2 comprises a permanent magnet piece 10, for example a NdFeB magnet piece, a first base plate 11, a second base plate 12 and at least one strap 13, for example a stainless steel or magnetical steel strap.

The magnet piece 10 is laid onto the first base plate 11. For example, the magnet piece 10 may be attached to the first base plate 11 by means of an adhesive. The strap or brace 13 is wound around the magnet piece 10 and the first base plate 11. The second base plate 12 is connected to the first base plate 11, for instance by means of spot welding. Preferably, the spot welding is carried out on the base plate 11 and 12 between two adjacent magnets 10. Using magnetical steel straps 13 gives the advantage of eliminating the magnetic air gap between the first base plate 11 and the second base plate 12. Moreover, the strap 13 may be glued to the magnet piece 10 and/or to the first base plate 11 and/or to the second base plate 12.

The first base plate 11 and the second base plate 12 have a rectangular shape. This means that the base area and the top surface of the first base plate 11 and the second base plate 12 have a rectangular shape. The second base plate 12 has a larger surface area than the first base plate 11. The second base plate 12 protrudes the first base plate 11, at least in direction a as shown in Figure 2.

The thickness d of the second base plate is approximately 2.65 mm so that it forms a proper and lasting connection in side grooves of T-shaped slots.

The straps 13 do not offer corrosion protection of the magnet piece 10. Therefore, the magnet piece 10 can be coated by means of a corrosion protecting means to offer protection against a high corrosion class.

Figure 3 schematically shows the permanent magnet assembly 16 in an axial side view. The axial direction is shown by an arrow b. A number of permanent magnets 10 are connected to the first base plate 11 as previously described. In Figure 3 the strap 13 or the used number of straps 13 do not cover the whole surface of the permanent magnets 10. Consequently, an additional corrosion protection is useful.

In Figure 4 the permanent magnet assembly 16, which is already described with reference to Figures 2 and 3, is shown in a perspective view. The permanent magnet assembly 16 comprises four permanent magnet pieces 10 which are attached to the first base plate 11. Each magnet piece 10 is connected to the first base plate 11 by means of a strap 13. The second base plate 12 is connected to the first base plate 11 as described in conjunction with Figure 2.

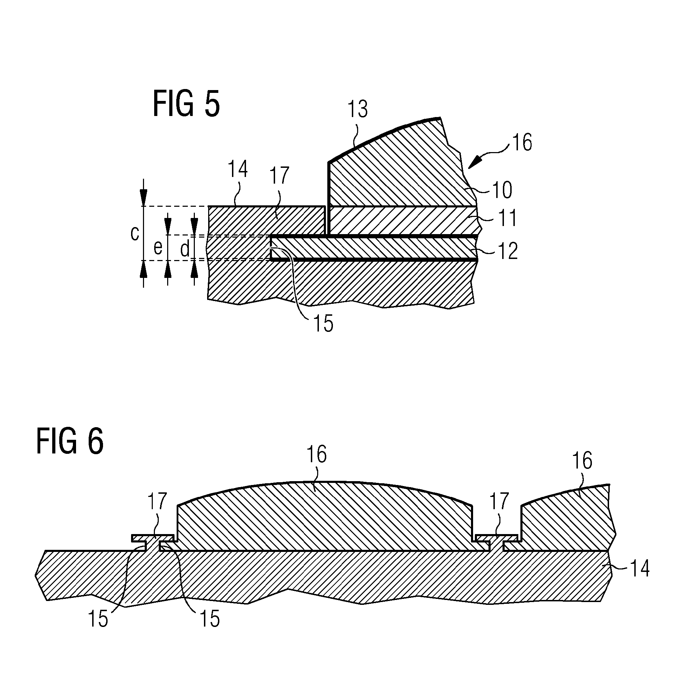

Figure 5 schematically shows a sectional view of part of a rotor or a rotor assembly which is equipped with a previously described permanent magnet assembly. The rotor assembly comprises a rotor yoke or rotor housing 14. The rotor yoke 14 comprises a number of T-shaped protrusions 17. By means of the protrusions 17 so called T-shaped slots are formed. Each T-shaped slot comprises two side grooves 15 for mounting the magnet assembly 16. The T-shaped slots have a depth c. The previously described permanent magnet assembly 16 is slid into the side grooves 15 such that the second base plate 12 is at least partly inserted into the side groove 15.

The side groove 15 has a width e which is preferably equal to the thickness d of the second base plate 12. Thus, the magnet 10 is located above the side groove 15 instead of inside the groove 15. Furthermore, the sum of the thicknesses of the base plates 11 and 12 has a value which is higher than the depth c of the T-shaped slot. This provides that the permanent magnet 10 is located completely outside of the T-shaped slot.

Figure 6 schematically shows two neighboring magnet assemblies 16 which are connected to a rotor yoke 14 by inserting them into side grooves 15 of T-shaped slots formed by protrusions 17 of the rotor yoke 14.

Generally, the magnet pieces 10 can be connected to the first base plate 11 by means of multiple straps for fixation of the magnet pieces 10. The straps are designed to be heated and slid over the magnet 10 and the first base plate 11, also called as magnet-base plate assembly. Then the straps are cooled down and shrink to give a tight fit.

The rotor assembly may be part of a generator, for example of a wind turbine generator.

The present invention provides a mechanical protection of the permanent magnet pieces against impact of foreign objects, shock and vibration by means of the used straps.

## Claims

1. A permanent magnet assembly (16) comprising a base plate (11) and at least one permanent magnet piece (10) which is attached to the base plate (11),
**characterised in that**
the at least one permanent magnet piece (10) is fixed to the base plate (11) by means of at least one strap (13).

2. The permanent magnet assembly (16) as claimed in claim 1, **characterised in that**
the at least one permanent magnet piece (10) comprises NdFeB.

3. The permanent magnet assembly (16) as claimed in claim 1 or claim 2,
**characterised in that**
the at least one strap (13) comprises steel.

4. The permanent magnet assembly (16) as claimed in any of the claims 1 to 3,
**characterised in that**
the permanent magnet assembly (16) comprises a second base plate (12) which is connected to the first base plate (11).

5. The permanent magnet assembly (16) as claimed in claim 4, **characterised in that**
the second base plate (12) has a thickness between 2mm and 3mm.

6. The permanent magnet assembly (16) as claimed in any of the claims 1 to 5,
**characterised in that**
the first base plate (11) and/or the second base plate (12) have a rectangular shape.

7. A rotor assembly for an electrical machine (6) comprising a permanent magnet assembly (16) as claimed in any of the claims 1 to 6.

8. The rotor assembly as claimed in claim 7,
**characterised in that**
the rotor assembly comprises a rotor yoke (14) with at least one groove (15) for holding the permanent magnet assembly (16) onto the rotor.

9. The rotor assembly as claimed in claim 7 or claim 8, **characterised in that**
the second base plate (12) comprises two sides which are inserted into corresponding grooves (15) of the rotor yoke (14).

10. The rotor assembly as claimed in claim 8 or claim 9, **characterised in that**
the at least one groove (15) has a width between 2mm and 3mm.

11. The rotor assembly as claimed in any of the claims 8 to 10,
**characterised in that**
the permanent magnet assembly (16) comprises a second base plate (12) which is connected to the first base plate (11), wherein the second base plate (12) has a thickness (d) which is equal to the width (e) of the groove (15).

12. An electrical machine (6) comprising a permanent magnet assembly (16) as claimed in any of the claims 1 to 6 or a rotor assembly as claimed in any of the claims 7 to 11.

13. The electrical machine (6) as claimed in claim 12, **characterised in that**
the electrical machine (6) is a generator.

14. A wind turbine (1) comprising an electrical machine (6) as claimed in claim 12 or claim 13.

15. A method for fixing at least one permanent magnet piece (10) onto a base plate (11), **characterised in**
- placing at least one permanent magnet piece (10) onto the base plate (11),
- heating at least one strap (13),
- sliding the at least one strap (13) over the at least one permanent magnet piece (10) and the base plate (11), and
- shrinking the at least one strap (13) by cooling it down.
